Europäisches Patentamt

(19) European Patent Office

Office européen des brevets

(11) Numéro de publication : **0 270 436 B1**

(12) # FASCICULE DE BREVET EUROPEEN

(45) Date de publication du fascicule du brevet :
**13.03.91 Bulletin 91/11**

(51) Int. Cl.$^5$ : **C08F 14/06,** C08F 2/18,
C08F 259/04

(21) Numéro de dépôt : **87402577.8**

(22) Date de dépôt : **16.11.87**

(54) Procédé de préparation en microsuspension ensemencée d'homo- et copolymères du chlorure de vinyle.

(30) Priorité : **24.11.86 FR 8616315**

(43) Date de publication de la demande :
**08.06.88 Bulletin 88/23**

(45) Mention de la délivrance du brevet :
**13.03.91 Bulletin 91/11**

(84) Etats contractants désignés :
**BE DE ES FR GB IT NL**

(56) Documents cités :
**EP-B-93 936**
**FR-A- 1 485 547**
**FR-A- 2 234 321**
**FR-A- 2 309 569**

(73) Titulaire : **ATOCHEM**
**4 & 8, Cours Michelet La Défense 10**
**F-92800 Puteaux (FR)**

(72) Inventeur : **Brulet, Daniel**
**Mas de Crapon Communay**
**F-69360 Saint Symphorien d'Ozon (FR)**

## Description

La présente invention a pour objet un procédé de préparation d'homo- et co-polymères du chlorure de vinyle, sous forme de latex, par polymérisation en microsuspension ensemencée du ou des monomères correspondants.

Selon les procédés, utilisés jusqu'alors, de préparation d'homo et co-polymères du chlorure de vinyle, par polymérisation en microsuspension ensemencée du ou des monomères correspondants, on réalise l'opération de polymérisation sur un milieu réactionnel contenant la totalité du chlorure de vinyle à mettre en oeuvre. Ces procédés conduisent à la formation d'une certaine quantité de croûtes.

Le procédé objet de l'invention permet par un choix approprié des conditions de mise en oeuvre du chlorure de vinyle, de réduire la quantité de croûtes formées, sans diminuer le taux de transformation du ou des monomères mis en oeuvre et sans conduire à une durée de polymérisation plus élevée.

Selon le procédé de l'invention on réalise la polymérisation en microsuspension en milieu aqueux du ou des monomères correspondants en présence d'au moins un produit d'ensemencement préparé préalablement par polymérisation en microsuspension.

Selon le procédé de l'invention on introduit le chlorure de vinyle dans le milieu aqueux de manière que le chlorure de vinyle présent dans ledit milieu, à l'état de monomère, pendant 50 à 100% de la durée de la période de polymérisation, représente au plus 30% du chlorure de vinyle mis en oeuvre.

A titre préférentiel on introduit le chlorure de vinyle dans le milieu aqueux de manière que le chlorure de vinyle présent dans ledit milieu, à l'état de monomère, pendant 80 à 100% de la durée de la période de polymérisation, représente au plus 30% du chlorure de vinyle mis en oeuvre.

A titre plus préférentiel on introduit le chlorure de vinyle dans le milieu aqueux de manière que le chlorure de vinyle présent dans ledit milieu, à l'état de monomère, pendant 90 à 100% de la durée de la période de polymérisation, représente au plus 30% du chlorure de vinyle mis en oeuvre.

La demanderesse a en effet trouvé qu'en introduisant, toutes choses égales par ailleurs, le chlorure de vinyle dans le milieu aqueux de manière que le chlorure de vinyle présent dans ledit milieu, à l'état de monomère, pendant une proportion suffisamment élevée, pouvant aller jusqu'à 100%, de la durée de la période de polymérisation, représente une proportion suffisamment faible du chlorure de vinyle mis en oeuvre, il est possible de réduire la quantité de croûtes formées, sans diminuer le taux de transformation du ou des monomères mis en oeuvre et sans conduire à une durée de polymérisation plus élevée.

A titre préférentiel on règle l'introduction du chlorure de vinyle dans le milieu aqueux de manière que, du début de la période de polymérisation à la fin de ladite introduction, le chlorure de vinyle présent dans ledit milieu, à l'état de monomère, représente au moins 5% du chlorure de vinyle mis en oeuvre.

Le chlorure de vinyle peut être introduit dans le milieu aqueux en continu ou par intermittence.

Selon l'invention on peut introduire généralement dans le milieu aqueux, avant le début de la période de polymérisation, de 0 à 50% du chlorure de vinyle mis en oeuvre et, au cours de la période de polymérisation, de 50 à 100% du chlorure de vinyle mis en oeuvre.

A titre préférentiel on introduit, dans le milieu aqueux, avant le début de la période de polymérisation, de 5 à 30% du chlorure de vinyle mis en oeuvre et, au cours de la période de polymérisation, de 70 à 95% du chlorure de vinyle mis en oeuvre.

Par polymères du chlorure de vinyle on entend généralement les homo- et co-polymères, ces derniers contenant au moins 50% en poids de chlorure de vinyle et au moins un monomère copolymérisable avec le chlorure de vinyle. Les monomères copolymérisables sont ceux généralement employés dans les techniques classiques de copolymérisation du chlorure de vinyle. On peut citer les esters vinyliques des acides mono- et polycarboxyliques, tels que acétate, propionate, benzoate de vinyle ; les acides insaturés mono- et poly-carboxyliques, tels que acrylique, méthacrylique, maléique, fumarique, itaconique, ainsi que leurs esters aliphatiques, cycloaliphatiques, aromatiques, leurs amides, leurs nitriles ; les halogénures d'allyle, de vinyle, de vinylidène ; les alkylvinyléthers ; les oléfines. Le ou les monomères copolymérisables avec le chlorure de vinyle, éventuellement utilisés, sont généralement introduits dans le milieu aqueux avant le début de la période de polymérisation.

Les polymères vinyliques, constituants du ou des produits d'ensemencement, sont représentés généralement par le polychlorure de vinyle, les copolymères du chlorure de vinyle et des monomères copolymérisables définis ci-dessus, les homopolymères desdits monomères, ainsi que les copolymères de ces monomères entre eux. Les polymères des différents produits d'ensemencement d'une même opération de polymérisation peuvent être identiques ou différents.

Le produit d'ensemencement préparé préalablement par polymérisation en microsuspension, c'est-à-dire polymérisation en présence d'initiateur(s) organosoluble(s) d'au moins un monomère dispersé par des moyens mécaniques énergiques (homogénéisé) tels que, par exemple, moulins à colloïdes, pompes rapides, agitateurs à vibrations, appareils à ultrasons, dans un milieu aqueux contenant au moins un émulsifiant, se présente sous forme d'une dispersion aqueuse de particules de polymère dont le diamètre moyen est compris généralement entre 0,05 et 2 μm et de préférence entre 0,2 et 1,5 μm.

La quantité du ou des produits d'ensemencement à mettre en oeuvre selon le procédé de l'invention est telle que la quantité de polymère qu'il ou ils contiennent représente généralement 1 à 50% en poids par rapport à la somme monomère(s) à polymériser plus polymère(s) d'ensemencement.

La quantité d'eau à mettre en oeuvre selon le procédé de l'invention est telle que la teneur initiale en monomère(s) plus polymère(s) d'ensemencement, compte tenu de la teneur en eau du produit d'ensemencement, est généralement comprise entre 10 et 50% en poids par rapport au mélange réactionnel.

Le ou les produits d'ensemencement, préparés préalablement par polymérisation en microsuspension, présents dans le milieu aqueux, est ou sont suffisant(s) pour assurer la dispersion du ou des monomère(s) sans qu'il soit nécessaire d'avoir recours à une nouvelle homogénéisation du milieu.

Comme initiateurs de polymérisation organosolubles utilisables pour la mise en oeuvre du procédé de l'invention on peut citer tous les initiateurs susceptibles d'être mis en oeuvre pour la préparation en microsuspension des polymères du chlorure de vinyle et représentés par les générateurs de radicaux libres tels que des peroxydes organiques comme le peroxyde de lauroyle, le peroxyde d'acétylcyclohexanesulfonyle, le peroxyde d'isobutyroyle, le peroxyde de dichloracétyle, le peroxyde de trichloracétyle ; des peroxydicarbonates comme le peroxydicarbonate d'éthyle, le peroxydicarbonate d'éthyle hexyle, le peroxydicarbonate d'isopropyle, le peroxydicarbonate d'isobutyle ; le perméthoxyacétate de tertiobutyle ; le peréthoxyacétate de tertiobutyle ; le perphénoxy-2-propionate de tertiobutyle. Ils sont employés en des proportions généralement de 0,05 à 3%, en poids par rapport au(x) monomère(s) mis en oeuvre.

Comme émulsifiants utilisables pour la mise en oeuvre du procédé de l'invention on peut citer en particulier les émulsifiants anioniques représentés de préférence par les savons d'acides gras, les alkylsufates alcalins, les alkylsulfonates alcalins, les alkylarylsulfonates alcalins, les alkylsulfosuccinates alcalins, les alkylphosphates alcalins. Ils sont éventuellement associés à des émulsifiants non ioniques représentés de préférence par les polycondensats d'oxyde d'éthylène et/ou de propylène sur divers composés organiques hydroxylés tel que les alcools gras et les nonylphénols. Les émulsifiants sont mis en oeuvre en des proportions généralement comprises entre 0,3 et 4% et de préférence entre 0,5 et 2%, en poids par rapport au(x) monomère(s) mis en oeuvre.

La polymérisation est réalisée habituellement sous pression autogène et agitation modérée, en portant et en maintenant le milieu réactionnel à température généralement comprise entre 10 et 85°C et de préférence entre 30 et 70°C. On peut faire varier la température de polymérisation pendant la réaction.

Le procédé de l'invention est particulièrement applicable aux techniques de polymérisation en microsuspension ensemencée décrites dans le brevet français n° 1 485 547 et son certificat d'addition n° 91709 ; dans le brevet français n° 73.20882, publié sous le n° 2 234 321 ; dans le brevet français n° 75.13582, publié sous le n° 2 309 569 ; et son certificat d'addition n° 76.08025, publié sous le n° 2 344 579 ; et dans le brevet français n° 79.21524, publié sous le n° 2 464 272.

Selon la technique décrite dans le brevet français n° 1 485 547, qui met en oeuvre un produit d'ensemencement, ledit produit d'ensemencement est sous forme d'un latex de polymère du chlorure de vinyle, préparé préalablement par polymérisation en microsuspension, dont les particules renferment la totalité de l'initiateur nécessaire à la polymérisation.

Selon la technique décrite dans le brevet français n° 75.13582, publié sous le n° 2 309 569, qui met en oeuvre deux produits d'ensemencement, les deux produits d'ensemencement sont sous forme de latex du chlorure de vinyle de taille de particules différente. Les particules de l'un au moins des produits d'ensemencement, préparé préalablement par polymérisation en microsuspension, renferment la totalité de l'initiateur nécessaire à la polymérisation. Le deuxième produit d'ensemencement peut être préparé par polymérisation en émulsion ou en microsuspension.

Pour augmenter la vitesse de polymérisation en microsuspension en présence d'au moins un produit d'ensemencement renfermant la totalité de l'initiateur nécessaire à la polymérisation il est recommandé d'activer l'initiateur par un complexe métallique hydrosoluble et un agent complexant introduit progressivement, ainsi qu'il est décrit dans le brevet français n° 73.20882, publié sous le n° 2 234 321. Le sel métallique est mis en oeuvre en quantité telle que le rapport molaire sel métallique/initiateur est compris entre 0,1 et 10 et le métal est représenté par le fer, le cuivre, le cobalt, le nickel, le zinc, l'étain, le titane, le vanadium, le manganèse, le chrome, l'argent. L'agent complexant, représenté par les acides mono- et poly-carboxyliques, les acides alkylphosphoriques, les lactones, les cétones, les carbazones, est utilisé en proportion pouvant atteindre la stoechiométrie molaire par rapport au sel métallique.

Pour obtenir une meilleure utilisation du complexe métallique organosoluble il est avantageux d'ajouter de l'acide nitrique en quantité telle que le rapport molaire acide nitrique/sel métallique soit compris entre 0,5 et 5 et de préférence entre 0,2 et 3, ainsi qu'il est décrit dans le brevet français n° 79.21524, publié sous le n° 2 464 272.

Après la baisse de pression la réaction est arrêtée et le ou les monomères non transformés sont éliminés par dégazage du polymérisat formé.

Le dégazage est réalisé généralement en amenant sous pression réduite le ou les monomères non transformés, le polymérisat étant porté ou maintenu à température au moins égale à 40°C et inférieure à la température de début de dégradation du polymère, ces conditions de pression et de température étant maintenues sensiblement jusqu'à l'arrêt du dégazage. Après dégazage on rétablit la pression atmosphérique avec un gaz inerte tel que l'azote ou plus généralement avec de l'air.

Les polymères du chlorure de vinyle préparés par le procédé de l'invention peuvent être séparés du milieu de polymérisation par tous procédés connus tels que filtration, coagulation-essorage, écaillage, décantation centrifuge, atomisation.

Les polymères du chlorure de vinyle qui peuvent être obtenus selon le procédé de l'invention sont applicables à la fabrication de feuilles, films, corps creux, matériaux cellulaires, articles moulés par les techniques de calandrage, extrusion, extrusion-soufflage, injection, ainsi qu'à la confection de revêtements enduits et articles moulés par toutes techniques de mise en oeuvre des plastisols et organosols telles qu'enduction, moulage par rotation, trempage, projection.

On donne ci-après, à titre indicatif et non limitatif, des exemples de réalisation du procédé de l'invention.

Dans les exemples 1 à 5 le procédé est mis en oeuvre par polymérisation en microsuspension en présence d'un produit d'ensemencement, selon la technique décrite dans le brevet français n° 1 485 547 et en présence d'un initiateur organosoluble activé par un complexe organosoluble d'un métal de transition tel que défini dans le brevet FR 2 234 321.

Dans les exemples 6 à 21 le procédé est mis en oeuvre par polymérisation en microsuspension en présence de deux produits d'ensemencement, selon la technique décrite dans le brevet français n° 75.13582, publié sous le n° 2 309 569.

Selon les exemples 1 à 16 le procédé concerne la préparation d'homopolymères de chlorure de vinyle.

Selon les exemples 17 à 21 le procédé concerne la préparation de copolymères de chlorure de vinyle et d'acétate de vinyle.

Les exemples 1, 6 à 9 et 17 sont donnés à titre comparatif.

Les exemples 2 à 5, 10 à 16 et 18 à 21 sont selon l'invention.

La préparation du ou des latex d'ensemencement mis en oeuvre dans les exemples est réalisée comme indiqué ci après :

Préparation du latex d'ensemencement 1 en microsuspension.

On mélange :
– 400 kg de chlorure de vinyle,
– 6 kg de peroxyde de lauroyle,
– 40 kg d'une solution aqueuse à 10% en poids de dodécylbenzènesulfonate de sodium,
– eau désionisée en quantité telle que la teneur en chlorure de vinyle du mélange soit de 43% en poids.

On homogénéise ce mélange de manière à obtenir une microsuspension, puis on introduit ladite microsuspension dans un autoclave en acier inoxydable de 1000 litres de capacité. On chauffe alors à 52°C sous pression autogène.

Après la chute de pression, c'est-à-dire après 9 heures, on dégaze le chlorure de vinyle qui n'a pas réagi. On obtient un latex dont la teneur pondérale en matière sèche est de 40% et dont les particules ont un diamètre moyen de 0,507 µm et renferment 1,92%, en poids par rapport au polymère, de peroxyde de lauroyle.

Préparation du latex d'ensemencement 2 en émulsion.

Dans un autoclave en acier inoxydable de 1000 litres de capacité on introduit :
– 606 kg d'eau désionisée,
– 26 kg d'une solution aqueuse à 10% en poids de tétradécylsulfonate de sodium,
– 0,53 kg d'ammoniaque à 22° Beaumé,
– 520 kg de chlorure de vinyle.

On chauffe alors le mélange à 52°C, sous pression autogène, et maintient cette température pendant la durée de l'opération. Dès que le mélange est à 52°C, on introduit 0,35 kg de persulfate de potassium, puis, après 15 min, on ajoute en continu 47,5 litres d'une solution aqueuse à 10% en poids de tétradécylsulfonate de sodium, à raison de 5 litres/heure. Après 9,5 heures à 52°C, on dégaze le chlorure de vinyle qui n'a pas réagi. On obtient un latex dont la teneur pondérale en matière sèche est de 40% et dont le diamètre moyen des particules est de 0,120 µm. Les particules ne renferment pas d'initiateur.

La polymérisation est réalisée dans un autoclave en acier inoxydable de 1000 litres de capacité, muni d'une double enveloppe à circulation de fluide et équipé d'un agitateur à pales, à arbre rotatif, d'un déflecteur et d'un réfrigérant condenseur à reflux. L'agitateur, en forme de cadre, a un diamètre périphérique de 0,75 m et ses pales, plates, une largeur de 75 mm. La distance radiale entre la périphérie des pales et le déflecteur est telle que le gradient de vitesse entre les pales et le déflecteur est de $20\,s^{-1}$ pour une vitesse périphérique de rotation de l'agitateur de 1,6 m/s.

Le taux, désigné par k, de chlorure de vinyle présent, pendant la période de polymérisation, à tout instant t, dans le milieu aqueux, à l'état de monomère, peut être déterminé à partir des grandeurs suivantes :

- $q_1$, quantité de chlorure de vinyle mis en oeuvre jusqu'à l'instant t,
- $Q_1$, quantité de chlorure de vinyle mis en oeuvre,
- $q_2$, quantité de phase aqueuse présente dans un échantillon de latex prélevé à l'instant t,
- $Q_2$, quantité de phase aqueuse présente dans le milieu réactionnel à l'instant t,
- $Q_3$, quantité de polymère(s) d'ensemencement,
- a, proportion pondérale de chlorure de vinyle dans les monomères transformés jusqu'à l'instant t, déterminée sur l'échantillon de latex prélevé à l'instant t (a est égal à 1 dans le cas où le seul monomère mis en oeuvre jusqu'à l'instant t est le chlorure de vinyle),
- b, teneur pondérale en polymère de l'échantillon de latex prélevé à l'instant t.

Le taux k, exprimé en pourcentage, est donné par la formule :

$$k = \frac{q_1 - a\left(\dfrac{bQ_2}{1-b} - Q_3\right)}{Q_1} \times 100$$

Dans tous les exemples les conditions de mise en oeuvre du chlorure de vinyle sont telles que la durée d pendant laquelle le chlorure de vinyle présent dans le milieu aqueux, à l'état de monomère, représente au plus 30% du chlorure de vinyle mis en oeuvre, forme une période continue désignée par "période à taux de chlorure de vinyle monomère réduit".

Le dégazage est réalisé d'abord par mise en communication directe de l'autoclave avec un gazomètre de stockage du chlorure de vinyle, maintenu sous pression absolue excédant de 50 mbar la pression atmosphérique, jusqu'à équilibre des pressions régnant dans l'autoclave et dans le gazomètre, puis à l'aide d'une pompe à vide aspirant dans l'autoclave et refoulant dans le gazomètre jusqu'à ce que la pression absolue dans l'autoclave corresponde sensiblement à la tension de vapeur d'eau à la température du polymérisat. Après dégazage on rétablit avec de l'air la pression régnant dans l'autoclave.

La quantité de croûtes est déterminée par passage du latex obtenu à travers un tamis d'ouverture de mailles de 500 µm. Elle est représentée par la quantité de polymère refusé audit tamis, en poids par tonne de polymère obtenu.

### EXEMPLES 1 à 5

On introduit dans l'autoclave 255 kg d'eau désionisée. Après mise sous vide on introduit également :
- la quantité de chlorure de vinyle, dont l'expression, en pourcentage du chlorure de vinyle mis en oeuvre, soit 320 kg, est donnée, pour chaque exemple, dans le tableau 1,
- 34 kg du latex d'ensemencement 1,
- 2,4 kg de dodécylbenzènesulfonate de sodium,
- 0,014 kg de sulfate de cuivre de formule $SO_4Cu, 5H_2O$.

On chauffe sous agitation le mélange réactionnel à 52°C, ce qui correspond à une pression relative de 7,5 bars, et maintient cette température pendant la durée de la polymérisation et du dégazage. Dès que la température atteint 52°C, on commence une introduction continue d'une solution aqueuse à 0,4 g/l d'acide ascorbique et à 1,6 g/l d'acide nitrique de densité 1,38, à raison de 0,6 l/h, et la poursuit jusqu'à la fin de la polymérisation. On introduit en continu la quantité complémentaire éventuelle de chlorure de vinyle. En fin de polymérisation, lorsque la baisse de pression est de 3,5 bars, on dégaze le polymérisat. Le taux de transformation du monomère mis en oeuvre est de $90 \pm 1\%$. On obtient un latex dont le diamètre moyen des particules est de $1,30 \pm 0,05$ µm.

EXEMPLES 6 à 16

On introduit dans l'autoclave 255 kg d'eau désionisée. Après mise sous vide on introduit également :
– la quantité de chlorure de vinyle dont l'expression, en pourcentage du chlorure de vinyle mis en oeuvre, soit 400 kg, est donnée, pour chaque exemple, dans le tableau 2,
– 51 kg du latex d'ensemencement 1,
– 25 kg du latex d'ensemencement 2,
– 2,8 kg de dodécylbenzènesulfonate de sodium,
– 0,015 kg de sulfate de cuivre de formule $SO_4Cu$, $5H_2O$.

On chauffe sous agitation le mélange réactionnel à 52°C, ce qui correspond à une pression relative de 7,5 bars, et maintient cette température pendant la durée de la polymérisation et du dégazage. Dès que la température atteint 52°C, on commence une introduction continue d'une solution aqueuse à 0,4 g/l d'acide ascorbique et à 1,6 g/l d'acide nitrique de densité 1,38, à raison de 0,6 l/h, et la poursuit jusqu'à la fin de la polymérisation. On introduit en continu la quantité complémentaire éventuelle de chlorure de vinyle. En fin de polymérisation, lorsque la baisse de pression est de 3,5 bars, on dégaze le polymérisat. Le taux de transformation du monomère mis en oeuvre est de 93 ± 1%. On obtient un latex à deux populations de particules de taille différente. La population de grosses particules et la population de fines particules ont des diamètres moyens respectifs de 1,10 ± 0,05 µm et de 0,20 ± 0,01 µm et représentent respectivement 82% et 18% en poids.

EXEMPLES 17 à 21

On introduit dans l'autoclave 255 kg d'eau désionisée. Après mise sous vide on introduit également :
– la quantité de chlorure de vinyle, dont l'expression, en pourcentage du chlorure de vinyle mis en oeuvre, soit 320 kg, est donnée, pour chaque exemple, dans le tableau 3,
– 30 kg d'acétate de vinyle,
– 30 kg du latex d'ensemencement 1,
– 27 kg du latex d'ensemencement 2,
– 2,4 kg de dodécylbenzènesulfonate de sodium,
– 0,014 kg de sulfate de cuivre de formule $SO_4Cu$, $5H_2O$.

On chauffe sous agitation le mélange réactionnel à 52°C, ce qui correspond à une pression relative de 7,5 bars, et maintient cette température pendant la durée de la polymérisation et du dégazage. Dès que la température atteint 52°C, on commence une introduction continue d'une solution aqueuse à 0,4 g/l d'acide ascorbique et à 1,6 g/l d'acide nitrique de densité 1,38, à raison de 0,6 l/h, et la poursuit jusqu'à la fin de la polymérisation. On introduit en continu la quantité complémentaire éventuelle de chlorure de vinyle. En fin de polymérisation, lorsque la baisse de pression est de 3,5 bars, on dégaze le polymérisat. Le taux de transformation du monomère mis en oeuvre est de 91 ± 1%.On obtient un latex à deux populations de particules de taille différente. La population de grosses particules et la population de fines particules ont des diamètres moyens respectifs de 1,20 ± 0,05 µm et de 0,15 ± 0,01 µm et représentent respectivement 90% et 10% en poids.

Les tableaux 1, 2 et 3 indiquent également respectivement pour chacun des exemples 1 à 5, 6 à 16 et 17 à 21 :
– le temps écoulé jusqu'au début de l'introduction de la quantité complémentaire éventuelle de chlorure de vinyle,
– la durée de l'introduction de la quantité complémentaire éventuelle de chlorure de vinyle,
– le temps écoulé jusqu'au début de la période à taux de chlorure de vinyle monomère réduit,
– la durée d de la période à taux de chlorure de vinyle monomère réduit,
– la durée dp de la période de polymérisation comptée jusqu'au début du dégazage,
– le rapport d/dp,
– la quantité de croûtes.

EP 0 270 436 B1

TABLEAU 1

| | EXEMPLE COMPARATIF | EXEMPLES SELON L'INVENTION | | | |
|---|---|---|---|---|---|
| | 1 | 2 | 3 | 4 | 5 |
| Quantité de chlorure de vinyle introduit avant le début de la période de polymérisation (%).... | 100 | 40 | 20 | 8 | 10 |
| Temps écoulé jusqu'au début de l'introduction de la quantité complémentaire éventuelle de chlorure de vinyle (h) ........................ | – | 3,5 | 0,5 | 0,5 | 0 |
| Durée de l'introduction de la quantité complémentaire éventuelle de chlorure de vinyle (h)... | – | 10 | 12,9 | 13,3 | 14,1 |
| Temps écoulé jusqu'au début de la période à taux de chlorure de vinyle monomère réduit (h).. | 12,6 | 1 | 0 | 0 | 0 |
| Durée d de la période à taux de chlorure de vinyle monomère réduit (h)........................ | 3,8 | 15,1 | 15,7 | 16,0 | 16,4 |
| Durée dp de la période de polymérisation (h).... | 16,4 | 16,1 | 15,7 | 16,0 | 16,4 |
| Rapport d/dp (%)................................ | 23,2 | 93,8 | 100 | 100 | 100 |
| Quantité de croûtes (kg)........................ | 13,5 | 6,1 | 5,8 | 5,4 | 5,0⁻ |

TABLEAU 2

| | EXEMPLES COMPARATIFS | | | | EXEMPLES SELON L'INVENTION | | | | | | |
|---|---|---|---|---|---|---|---|---|---|---|---|
| | 6 | 7 | 8 | 9 | 10 | 11 | 12 | 13 | 14 | 15 | 16 |
| Quantité de chlorure de vinyle introduit avant le début de la période de polymérisation (%)... | 100 | 80 | 80 | 40 | 50 | 45 | 40 | 35 | 20 | 10 | 8 |
| Temps écoulé jusqu'au début de l'introduction de la quantité complémentaire éventuelle de chlorure de vinyle (h).......... | – | 9 | 0,5 | 0,5 | 6 | 2 | 3 | 0 | 0,5 | 0 | 0,5 |
| Durée de l'introduction de la quantité complémentaire éventuelle de chlorure de vinyle (h) | – | 2 | 11 | 2 | 4,5 | 9,5 | 8 | 7,5 | 10,6 | 12 | 11 |
| Temps écoulé jusqu'au début de la période à taux de chlorure de vinyle monomère réduit (h)...... | 10,9 | 9,5 | 8,8 | 8,3 | 5 | 5,6 | 1,0 | 4,3 | 0 | 0 | 0 |
| Durée d de la période à taux de chlorure de vinyle monomère réduit (h)...................... | 3,8 | 5,2 | 5,8 | 6,3 | 8,6 | 7,0 | 13,0 | 10,3 | 13,8 | 14,1 | 14,0 |
| Durée dp de la période de polymérisation (h)................... | 14,7 | 14,7 | 14,6 | 14,6 | 13,6 | 12,6 | 14,0 | 14,6 | 13,8 | 14,1 | 14,0 |
| Rapport d/dp (%)............... | 25,9 | 35,4 | 40,0 | 43,2 | 63,2 | 55,6 | 92,9 | 70,5 | 100 | 100 | 100 |
| Quantité de croûtes (kg)........ | 12,1 | 11,2 | 11,5 | 10,8 | 7,2 | 7,2 | 6,1 | 7,5 | 3,8 | 4,1 | 4,0 |

EP 0 270 436 B1

TABLEAU 3

| | EXEMPLE COMPARATIF | EXEMPLES SELON L'INVENTION | | | |
|---|---|---|---|---|---|
| | 17 | 18 | 19 | 20 | 21 |
| Quantité de chlorure de vinyle introduit avant le début de la période de polymérisation (%) | 100 | 40 | 20 | 8 | 10 |
| Temps écoulé jusqu'au début de l'introduction de la quantité complémentaire éventuelle de chlorure de vinyle (h) | – | 3 | 0,5 | 0,5 | 0 |
| Durée de l'introduction de la quantité complémentaire éventuelle de chlorure de vinyle (h) | – | 9,3 | 12,6 | 12,7 | 13,5 |
| Temps écoulé jusqu'au début de la période à taux de chlorure de vinyle monomère réduit (h) | 11,6 | 1,5 | 0 | 0 | 0 |
| Durée d de la période à taux de chlorure de vinyle monomère réduit (h) | 4,2 | 13,1 | 15,2 | 15,5 | 15,8 |
| Durée dp de la période de polymérisation (h) | 15,8 | 14,6 | 15,2 | 15,5 | 15,8 |
| Rapport d/dp (%) | 26,7 | 89,8 | 100 | 100 | 100 |
| Quantité de croûtes (kg) | 10,5 | 5,4 | 4,6 | 3,2 | 3,8 |

EP 0 270 436 B1

**Revendications**

1. Procédé de préparation d'homo- et co-polymères du chlorure de vinyle sous forme de latex selon lequel on réalise la polymérisation en microsuspension en milieu aqueux du ou des monomères correspondants en présence d'au moins un produit d'ensemencement préparé préalablement par polymérisation en microsuspension, caractérisé par le fait que l'on introduit le chlorure de vinyle dans le milieu aqueux de manière que le chlorure de vinyle présent dans ledit milieu, à l'état de monomère, pendant 50 à 100% de la durée de la période de polymérisation, représente au plus 30% du chlorure de vinyle mis en oeuvre.

2. Procédé selon la revendication 1, caractérisé par le fait que l'on introduit le chlorure de vinyle dans le milieu aqueux de manière que le chlorure de vinyle présent dans ledit milieu, à l'état de monomère, pendant 80 à 100% de la durée de la période de polymérisation, représente au plus 30% du chlorure de vinyle mis en oeuvre.

3. Procédé selon l'une quelconque des revendications 1 et 2, caractérisé par le fait que l'on introduit le chlorure de vinyle dans le milieu aqueux de manière que le chlorure de vinyle présent dans ledit milieu, à l'état de monomère, pendant 90 à 100% de la durée de la période de polymérisation, représente au plus 30% du chlorure de vinyle mis en oeuvre.

4. Procédé selon l'une quelconque des revendications 1 à 3, caractérisé par le fait que l'on règle l'introduction du chlorure de vinyle dans le milieu aqueux de manière que, du début de la période de polymérisation à la fin de ladite introduction, le chlorure de vinyle présent dans ledit milieu, à l'état de monomère, représente au moins 5% du chlorure de vinyle mis en oeuvre.

5. Procédé selon l'une quelconque des revendications 1 à 4, caractérisé par le fait que le chlorure de vinyle est introduit dans le milieu aqueux en continu.

6. Procédé selon l'une quelconque des revendications 1 à 4, caractérisé par le fait que le chlorure de vinyle est introduit dans le milieu aqueux par intermittence.

7. Procédé selon la revendication 1, caractérisé par le fait que l'on introduit, dans le milieu aqueux, avant le début de la période de polymérisation, de 0 à 50% du chlorure de vinyle mis en oeuvre et, au cours de la période de polymérisation, de 50 à 100% du chlorure de vinyle mis en oeuvre.

8. Procédé selon la revendication 7, caractérisé par le fait que l'on introduit, dans le milieu aqueux, avant le début de la période de polymérisation, de 5 à 30% du chlorure de vinyle mis en oeuvre et, au cours de la période de polymérisation, de 70 à 95% du chlorure de vinyle mis en oeuvre.


**Ansprüche**

1. Verfahren zur Herstellung von Vinylchloridhomo- und -copolymeren in Latexform, bei dem die Polymerisation des oder der entsprechenden Monomeren in Mikrosuspension in wäßrigem Medium in Gegenwart mindestens eines Keimproduktes durchgeführt wird, das zuvor durch Polymerisation in Mikrosuspension hergestellt worden ist, dadurch gekennzeichnet, daß man das Vinylchlorid in das wäßrige Medium so einspeist, daß das in diesem Medium im monomeren Zustand während 50 bis 100% der Polymerisationsdauer vorhandene Vinylchlorid höchstens 30% des eingesetzten Vinylchlorids ausmacht.

2. Verfahren nach Anspruch 1, dadurch gekennzeichnet, daß man das Vinylchlorid in das wäßrige Medium so einspeist, daß das in diesem Medium im monomeren Zustand während 80 bis 100% der Polymerisationsdauer vorhandene Vinylchlorid höchstens 30% des eingesetzten Vinylchlorids ausmacht.

3. Verfahren nach einem der Ansprüche 1 und 2, dadurch gekennzeichnet, daß man das Vinylchlorid so in das wäßrige Medium einspeist, daß das in diesem Medium im monomeren Zustand während 90 bis 100% der Polymerisationsdauer vorhandene Vinylchlorid höchstens 30% des eingesetzten Vinylchlorids ausmacht.

4. Verfahren nach einem der Ansprüche 1 bis 3, dadurch gekennzeichnet, daß man die Einspeisung des Vinylchlorids in das wäßrige Medium so regelt, daß vom Beginn der Polymerisationsdauer bis zu beendeter Einspeisung das in diesem Medium im monomeren Zustand vorhandene Vinylchlorid mindestens 5% des eingesetzten Vinylchlorids ausmacht.

5. Verfahren nach einem der Ansprüche 1 bis 4, dadurch gekennzeichnet, daß das Vinylchlorid kontinuierlich in das wäßrige Medium einsespeist wird.

6. Verfahren nach einem der Ansprüche 1 bis 4, dadurch gekennzeichnet, daß das Vinylchlorid diskontinuierlich in das wäßrige Medium eingespeist wird.

7. Verfahren nach Anspruch 1, dadurch gekennzeichnet, daß man in das wäßrige Medium vor Beginn der Polymerisationsdauer 0 bis 50% des eingesetzten Vinylchlorids und im Verlauf der Polymerisation 50 bis 100% des eingesetzten Vinylchlorids einspeist.

8. Verfahren nach Anspruch 7, dadurch gekennzeichnet, daß man in das wäßrige Medium vor Beginn der Polymerisationsdauer 5 bis 30% des eingesetzten Vinylchlorids und im Verlauf der Polymerisation 70 bis 95% des eingesetzten Vinylchlorids einspeist.

## Claims

1. Process for the preparation of vinyl chloride homo- and copolymers in the form of latex according to which the polymerization is carried out in a microsuspension in an aqueous medium of the corresponding monomer or monomers in the presence of at least one seeding material previously prepared by microsuspension polymerization, characterized in that the vinyl chloride is introduced into the aqueous medium such that the vinyl chloride present in said medium in its monomer form represents at most 30% of the vinyl chloride used during 50 to 100% of the duration of the polymerization period.

2. Process according to Claim 1, characterized in that the vinyl chloride is introduced into the aqueous medium such that the vinyl chloride present in said medium in its monomer form represents at most 30% of the vinyl chloride used during 80 to 100% of the duration of the polymerization period.

3. Process according to any of Claims 1 or 2, characterized in that the vinyl chloride is introduced into the aqueous medium such that the vinyl chloride present in said medium in its monomer form represents at most 30% of the vinyl chloride used during 90 to 100% of the duration of the polymerization period.

4. Process according to any of Claims 1 to 3, characterized in that the introduction of the vinyl chloride into the aqueous medium is controlled in such a way that from the beginning of the polymerization period until the end of said introduction the vinyl chloride present in said medium in its monomer form represents at least 5% of the vinyl chloride used.

5. Process according to any of Claims 1 to 4, characterized in that the vinyl chloride is introduced continuously into the aqueous medium.

6. Process according to any of Claims 1 to 4, characterized in that the vinyl chloride is introduced intermittently into the aqueous medium.

7. Process according to Claim 1, characterized in that 0 to 50% of the vinyl chloride used is introduced into the aqueous medium before the beginning of the polymerization period and 50 to 100% of the vinyl chloride used during the polymerization period.

8. Process according to Claim 7, characterized in that 5 to 30% of the vinyl chloride used is introduced into the aqueous medium before the beginning of the polymerization period and 70 to 95% of the vinyl chloride used during the polymerization period.